# EUROPÄISCHE PATENTSCHRIFT

(11) **EP 1 204 825 B1**
(45) Veröffentlichungstag und Bekanntmachung des Hinweises auf die Patenterteilung: **08.01.2003**
(21) Anmeldenummer: 00977419.1
(22) Anmeldetag: 20.10.2000
(51) Int. Cl.: F16B 13/08

(54) **BEFESTIGUNGSELEMENT**
SECURING ELEMENT
ELEMENT DE FIXATION

(30) Priorität: 26.10.1999 DE 19951484; 07.12.1999 DE 19958714
(43) Veröffentlichungstag der Anmeldung: 15.05.2002
(73) Patentinhaber: TOGE-Dübel A. Gerhard KG, 90431 Nürnberg (DE)
(72) Erfinder: GERHARD, Anton, 90427 Nürnberg (DE)
(74) Vertreter: Rau, Manfred, Dr. Dipl.-Ing.
(86) Internationale Anmeldenummer: EP0010323
(87) Internationale Veröffentlichungsnummer: WO01031206

(56) Entgegenhaltungen:
- EP-A- 0 186 622
- DE-A- 2 905 337
- DE-A- 2 913 090
- DE-A- 19 501 449
- DE-A- 19 531 693
- US-A- 4 312 611

## Beschreibung

Die Erfindung betrifft ein Befestigungselement nach dem Oberbegriff des Anspruches 1.

Ein derartiges Befestigungselement ist aus der DE 29 13 090 A1 bekannt. Hierbei ist die Sollbruchzone durch zwei von den Seiten ausgehende, etwa rechteckige Kerben gebildet, zwischen denen ein Trennsteg verbleibt. Wenn die auf den Klemmkeil aufgebrachte Kraft beim Eintreiben des Klemmkeils einen vorgegebenen Wert übersteigt, dann bricht der Trennsteg, so daß dann die beiden verbleibenden Teil-Abschnitte des Klemmkeils ineinander rutschen können. Die beiden Abschnitte können um die axiale Erstreckung einer Einkerbung ineinander gleiten, ohne daß dem ein nennenswerter Widerstand entgegensteht. Hiermit kann zwar erreicht werden, daß die außen liegende Stirnseite des Klemmkeils bündig mit dem Flansch liegt; es ist aber nicht auszuschließen, daß das Befestigungselement sich wieder setzen kann, d.h. daß der Ankerbolzen um ein gewisses Maß aus dem Bohrloch austritt, in dem er angeordnet ist. Dies gilt insbesondere dann, wenn das Bohrloch durch Rißbildung erweitert wird.

Der Erfindung liegt die Aufgabe zugrunde, ein Befestigungselement der gattungsgemäßen Art so auszugestalten, daß es auch bei einer Rißbildung im Bohrloch zuverlässig gehalten wird.

Diese Aufgabe wird erfindungsgemäß durch die Merkmale im Kennzeichnungsteil des Anspruches 1 gelöst. Der Kern der Erfindung liegt darin, daß beim Einschlagen des Klemmkeils eine der beiden Sollbruchstellen bricht und der zwischen ihnen liegende Keil-Abschnitt um die nicht zerbrochene Sollbruchstelle nach außen schwenkt, wobei der Klemmkeil im Bereich der gebrochenen Sollbruchstelle unter den Keil-Abschnitt gedrückt wird und diesen nach außen drückt. Hierdurch gräbt sich der Keil-Abschnitt mit der an der gebrochenen Sollbruchstelle entstandenen Kante in den Baustoff ein, in dem das das Befestigungselement aufnehmende Bohrloch ausgebildet ist.

Weitere vorteilhafte und zum Teil erfinderische Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: einen Ankerbolzen in Seiten-Längs-Ansicht entsprechend dem Sichtpfeil I in Fig. 2,
- Fig. 2: den Ankerbolzen in einer weiteren Seiten-Längs-Ansicht entsprechend dem Sichtpfeil II in Fig. 1,
- Fig. 3: eine Draufsicht auf den Ankerbolzen entsprechend dem Sichtpfeil III in Fig. 1,
- Fig. 4: einen Klemmkeil in Seiten-Längs-Ansicht entsprechend dem Sichtpfeil IV in Fig. 5,
- Fig. 5: eine weitere Seiten-Längs-Ansicht des Klemmkeils entsprechend dem Sichtpfeil V in Fig. 4,
- Fig. 6: ein aus Ankerbolzen und Klemmkeil bestehendes Befestigungselement in ungespreiztem Zustand in einer Seiten-Längs-Ansicht entsprechend dem Sichtpfeil VI in Fig. 7,
- Fig. 7: eine weitere Seiten-Längs-Ansicht des Befestigungselementes entsprechend dem Sichtpfeil VII in Fig. 6,
- Fig. 8: eine Draufsicht auf das Befestigungselement entsprechend dem Sichtpfeil VIII in Fig. 6 und
- Fig. 9: eine Längsansicht des Befestigungselementes in in ein Bohrloch eingetriebenem Zustand.

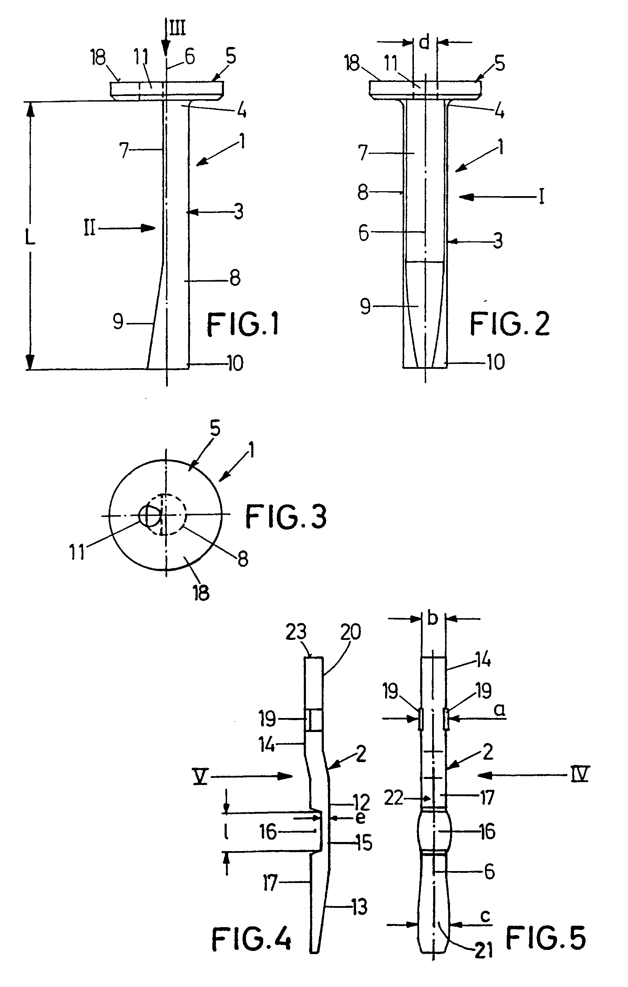

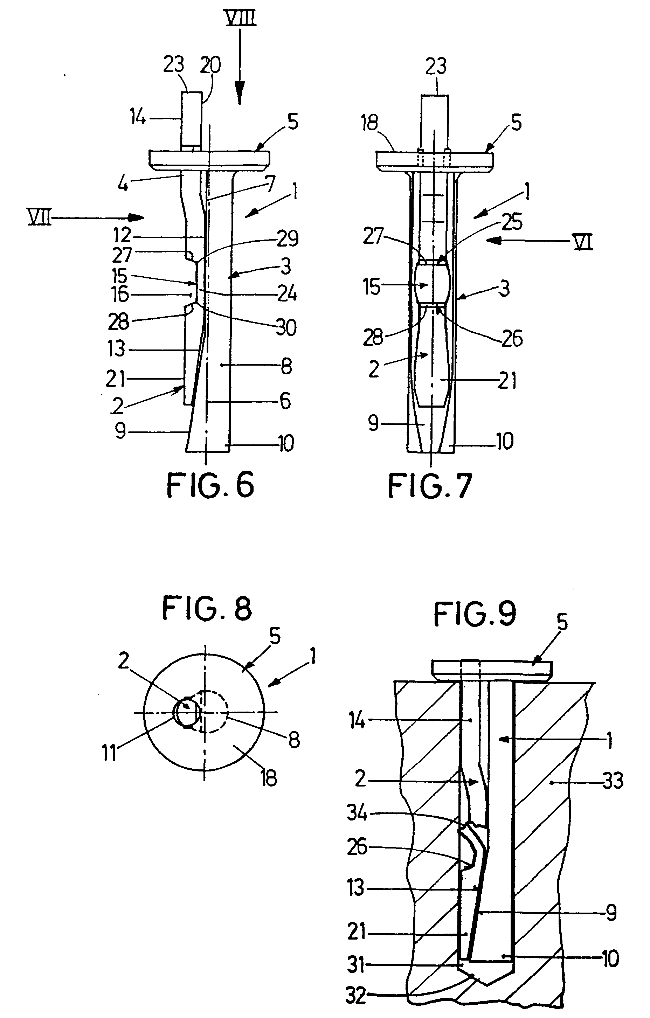

Das in der Zeichnung dargestellte Befestigungselement weist einen Ankerbolzen 1 und einen Klemmkeil 2 auf. Der Ankerbolzen 1 besteht in seinem Grundaufbau aus einem Schaft 3 und einem an dessen hinteren Ende 4 ausgebildeten kreisscheibenförmigen Flansch 5, wobei Schaft 3 und Flansch 5 einteilig, beispielsweise durch entsprechende Verformung aus einem Draht, hergestellt sind. Der Schaft 3 besteht in seinem Grundaufbau aus einem massiven Teil-Kreis-Zylinder mit einer Mittel-Längs-Achse 6, die der Einfachheit halber auch als Achse 6 des Ankerbolzens 1 und des gesamten Befestigungselementes bezeichnet wird. Vom hinteren Ende 4 des Schaftes 3 verläuft etwa über die Hälfte bis zwei Drittel seiner Gesamtlänge L eine Fläche 7 parallel zur Achse 6, und zwar in deren Nähe, so daß sich die Zylinderfläche 8 des Schaftes 3 in diesem Bereich nur über etwa 190° bis 200° Umfangswinkel erstreckt, wie aus Fig. 3 und 8 erkennbar ist. Im vorderen Bereich des Schaftes 3 erstreckt sich - ausgehend von der Fläche 7 - eine Keilfläche 9, die also vom vorderen Ende 10 des Schaftes 3 zur Achse 6 hin geneigt ist. Am vorderen Ende 10 nähert sich der Querschnitt des Schaftes 3 wieder einem - allerdings noch nicht vollständigen - Kreisprofil wie Fig. 3 und 8 zu entnehmen ist. Die Keilfläche 9 und die Fläche 7 sind jeweils eben, müssen dies aber nicht sein.

Im Flansch 5 ist eine kreiszylindrische Ausnehmung 11 ausgebildet, die parallel zur Achse 6 verläuft. Sie tangiert die Fläche 7 und steht über die Zylinderfläche 8 vor, wie jeweils den Fig. 3 und 8 entnehmbar ist.

Der Klemmkeil 2 weist eine Anlagefläche 12 auf, die der Fläche 7 des Schaftes 3 angepaßt ist. Im vorderen Bereich des Klemmkeils 2 schließt sich an die Anlagefläche 12 eine Spreizfläche 13 an, die in ungespreiztem Zustand des Befestigungselementes zumindest teilweise an der Keilfläche 9 des Schaftes 3 anliegt, wie Fig. 6 und 7 entnehmbar ist. In diesem ungespreizten Zustand liegt der durch die Anlagefläche 12 und die Spreizfläche 13 definierte Bereich des Klemmkeils 2 innerhalb des durch die vervollständigte Zylinderfläche 8 gebildeten Kreises, steht also nicht radial über diese Fläche vor. Der Klemmkeil 2 weist in seinem dem Flansch 5 zugeordneten Bereich einen von der Fläche 7 weg abgekröpften Abschnitt 14 auf, der parallel zur Achse 6 verläuft, die Ausnehmung 11 durchsetzt und über den Flansch 5 nach hinten vorsteht. In seinem mittleren Bereich weist der Klemmkeil 2 eine sogenannte Sollbruchzone 15 auf, die durch eine leichte Einbuchtung 16 in der Anlagefläche 12 des Klemmkeils 2 gebildet ist und die weiter unten noch genauer beschrieben wird.

Der Klemmkeil 2 weist in seinem abgekröpften Abschnitt 14, und zwar zugeordnet zur Stirnfläche 18, zwei einander in einer zur Fläche 7 parallelen Ebene diametral gegenüberliegende stegartige Vorsprünge 19 auf, deren Außenabstand a voneinander etwas größer ist als der Durchmesser d der Ausnehmung 11. Die größte Breite b des Klemmkeils 2 im Bereich seines abgekröpften Abschnittes 14 ist wiederum etwas kleiner als der Durchmesser d. Der abgekröpfte Abschnitt 14 weist eine der Fläche 7 zugewandte abgeflachte Innenfläche 20 auf, liegt also in diesem Bereich nicht an der Ausnehmung 11 an. Der Klemmkeil 2 weist im Bereich seiner Spreizfläche 13 einen schaufelartig verbreiterten Spreiz-Abschnitt 21 auf. Dessen Breite c ist größer als der Durchmesser d der Ausnehmung 11. Der Grund für die Verbreiterung des Spreiz-Abschnittes 21 relativ zum gekröpften Abschnitt 14 und zum Zwischen-Abschnitt 22 liegt darin, daß zumindest der Abschnitt 14 schlanker ausgebildet werden muß wegen der Begrenzung des Durchmessers d der Ausnehmung 11.

Die die Sollbruchzone 15 im wesentlichen bildende Einbuchtung 16 ist zur Außenfläche 17 des Klemmkeils 2 hin offen und wird an ihrem Grund durch einen flachen Keil-Abschnitt 24 begrenzt, der etwa gleichmäßige Dicke e aufweist und mit der Anlagefläche 12 fluchtet. Wie den Fig. 5 und 7 entnehmbar ist, ist dieser Abschnitt 24 seitlich ausgebaucht, so daß er - bezogen auf die Längsrichtung des Klemmkeils 2 - an seinen beiden Enden am Übergang zum normalen Querschnitt des Klemmkeils 2 seine geringste Breite aufweist. Diese beiden Endbereiche bilden Sollbruchstellen 25, 26. Diese Sollbruchstellen 25, 26 verlaufen quer zur Achse 6 und parallel zur Anlagefläche 12. Von diesen Sollbruchstellen 25, 26 aus geht der Keil-Abschnitt 24 jeweils mittels Schrägflächen 27, 28 in die Außenfläche 17 des Klemmkeils 2 über, wobei diese Schrägflächen 27, 28 - ausgehend vom Keil-Abschnitt 24 - zur Stirnseite 23 bzw. zum Spreiz-Abschnitt 21 hin geneigt sind. An der jeweiligen Sollbruchstelle 25 bzw. 26, also am Übergang vom Keil-Abschnitt 24 in die jeweilige Schrägfläche 27 bzw. 28, können zusätzlich kleine Kerben 29, 30 ausgebildet sein. Die Länge 1 des Keil-Abschnitts 24 in Längsrichtung des Klemmkeils 2, also der Abstand der Sollbruchstellen 25, 26 voneinander, ist größer als dessen Dicke e, und zwar 5 bis 10 mal größer. Im Bereich der Sollbruchstellen 25, 26 können weiterhin fertigungsbedingt Haarrisse bzw. Versprödungen vorhanden sein, was den gewünschten Effekt einer Sollbruchstelle verstärkt.

Der Ankerbolzen 1 und der Klemmkeil 2 bestehen beide aus dem gleichen Material, nämlich einem hochlegierten rostfreien Stahl, also einem Chrom-Nickel-Stahl. Der Ankerbolzen 1 hat beispielsweise eine Zugfestigkeit von etwa 700 N/mm². Wie bereits erwähnt, ist der Ankerbolzen 1 durch Verformen eines Drahtes, also eines Abschnitts aus zylindrischem Material (Rundmaterial), durch Anformen des Flansches 5 gebildet. Die Fläche 7 und die Keilfläche 9 werden durch Ausstanzen aus dem nach der Anformung des Flansches 5 zylindrischen Schaft 3 ausgebildet.

Der Klemmkeil 2 wird ebenfalls aus Rundmaterial hergestellt, das durch sogenanntes Hartziehen eine Zugfestigkeit 1300 bis 1400 N/mm² erhalten hat. Die entspricht einer Rockwell-Härte von ungefähr 42 HRc. Die Zugfestigkeit und die erhöhte Härte des Materials, aus dem der Klemmkeil 2 gefertigt wird, ist also durch das Hartziehen gegenüber dem nicht derart behandelten Werkstoff etwa verdoppelt worden. Die geschilderte Form erhält der Klemmkeil 2 durch einen Prägevorgang, also spanlos. Nach diesem Prägevorgang weist er allerdings noch nicht die in Fig. 4 und 5 dargestellten Vorsprünge 19 auf. Der Klemmkeil 2 wird dann von der Schaft-Seite her mit seinem abgekröpften Abschnitt 14 in die Ausnehmung 11 geschoben, bis er weitestmöglich durch den Flansch 5 geschoben ist, bis also der abgekröpfte Abschnitt 14 vollständig oder zumindest angenähert vollständig'durch die Ausnehmung 11 hindurchgeschoben ist. Die Außenfläche 17 liegt hierbei an der Fläche 7 an. Die Spreizfläche 13 befindet sich zumindest teilweise in Überdeckung mit der Fläche 7. Nunmehr werden die Vorsprünge 19 durch einen Prägevorgang am Klemmkeil 2 ausgebildet. Anschließend wird der Klemmkeil 2 wieder in Richtung auf das hintere Ende 4 des Schaftes 3 verschoben, wobei die Vorsprünge 19 teilweise in den Flansch 5 eingepreßt werden, und zwar von dessen Stirnfläche 18 her. Sie durchdringen - wie Fig. 8 entnehmbar ist - nicht vollständig den Flansch 5. Durch die Vorsprünge 19 und den Spreiz-Abschnitt 21 wird eine Verliersicherung des Klemmkeils 2 gegenüber dem Ankerbolzen 1 gebildet, da der Klemmkeil 2 in keiner Richtung aus dem Flansch 5 herausrutschen kann. Durch die geschilderte Verkeilung der Vorsprünge 19 im Flansch 5 wird wiederum eine Mitnahmeverbindung geschaffen.

Wenn das vormontierte, aber noch nicht verspreizte Befestigungselement in ein Bohrloch 31 eingeschoben wird und hierbei mit leichten Hammerschlägen auf die hintere Stirnseite 23 des Klemmkeils 2 eingetrieben wird, dann wird der Ankerbolzen 1 über die Vorsprünge 19 mitgenommen, die - wie beschrieben wurde - den Flansch 5 nur auf der Seite seiner äußeren Stirnfläche 18 durchsetzen. Wenn das vordere Ende 10 des Ankerbolzens 1 beim Einsetzen in das Bohrloch 31 am Bohrlochgrund 32 angekommen ist, oder wenn der Ankerbolzen 1 nicht tiefer in das Bohrloch eindringen kann, weil der Flansch 5 bereits fest anliegt, dann erfolgt das Eintreiben des Klemmkeils 2, der mit seiner Spreizfläche 13 über die Keilfläche 9 gleitet und hierbei bezogen auf die Achse 6 radial nach außen verschoben wird. Jetzt erst durchdringen die Vorsprünge 19 den Flansch 5 vollständig und gelangen teilweise oder völlig in Überdeckung mit dem Schaft 3. Wenn die Verkeilung vollendet ist, ein Teil des abgekröpften Abschnitts 14 aber noch - wie üblich - über die Stirnfläche 18 des Flansches 5 hinaussteht, kann der abgekröpfte Abschnitt 14 weiter eingetrieben werden, wobei dann der Klemmkeil 2 im Bereich seiner Sollbruchzone 15 unter Verkürzung des Klemmkeils 2 aufgespreizt wird.

Hierbei bricht - wie in Fig. 9 dargestellt - üblicherweise nur eine Sollbruchstelle 25, und zwar in der überwiegenden Zahl der Fälle die der Stirnseite 23 benachbarte Sollbruchstelle 25, mit der Folge, daß der Keil-Abschnitt 24 um die andere Sollbruchstelle 26 nach außen gebogen wird und über die Schrägfläche 27 nach außen gleitet und sich in den Baustoff 33 eingräbt, in den das Bohrloch 31 eingebracht ist. Die an der Sollbruchstelle 25 entstandene Kante 34 des Keil-Abschnitt 24 rutscht über die zugeordnete Schrägfläche 27, bis diese Kante im Baustoff 33 anlangt. Wesentlich ist, daß der Teil des Klemmkeils 2, an dem die Sollbruchstelle 25 oder 26 gebrochen ist, sich unter den Keil-Abschnitt 24 schiebt und ihn stützt, wie in Fig. 9 dargestellt ist. Der Keil-Abschnitt 24 wirkt jetzt wie ein Widerhaken. Aber auch, wenn die andere Sollbruchstelle 26 bricht, verkeilt sich der Keil-Abschnitt 24 im Baustoff 33.

Wenn nunmehr, beispielsweise durch Rißbildung, der Durchmesser des Bohrloches 31 geringfügig erweitert wird mit der Folge, daß die Verkeilung des Ankerbolzens 1 mit Klemmkeil 2 im Bohrloch 31 gelockert würde und entsprechend der Ankerbolzen 1 geringfügig aus dem Bohrloch 31 herausrutscht, dann wird der Spreiz-Abschnitt 21 des Klemmkeils 2 im Bohrloch 31 festgehalten und gleitet ein klein wenig weiter auf der Keilfläche 9 des Ankerbolzens 1 mit der Folge, daß die Verkeilung wieder hergestellt wird. Dies wird durch die Verkeilung des Keil-Abschnitts 24 im Baustoff 33 gefördert, so daß insgesamt die Auszugsfestigkeit des Befestigungselementes im Bohrloch 31 vergrößert wird.

Auch wenn das dargestellte und beschriebene Befestigungselement aus hochlegiertem Chrom-Nickel-Stahl besteht, so kann das Befestigungselement in gleicher Weise aus Baustahl bestehen, wobei dann insbesondere der Klemmkeil 2 wiederum gehärtet sein kann.

## Patentansprüche

1. Befestigungselement, bestehend aus einem Ankerbolzen (1) mit einem Schaft (3) und einem Klemmkeil (2), wobei am hinteren Ende (4) des Ankerbolzens (1) ein Flansch (5) mit einer Ausnehmung (11) für den Klemmkeil (2) vorgesehen ist, wobei der Schaft (3) in seinem vorderen Bereich mit einer Keilfläche (9) versehen ist, die von seinem vorderen Ende (10) in Richtung zum hinteren Ende (4) zur Mittel-Längs-Achse (6) des Ankerbolzens (1) hin geneigt ist, wobei sich an diese Keilfläche (9) eine sich im wesentlichen parallel zur Mittel-Längs-Achse (6) erstreckende, bis zum hinteren Ende (4) verlaufende Fläche (7) anschließt, und wobei der Klemmkeil (2) in ungespreiztem Zustand mit einer Anlagefläche (12) an der achsparallelen Fläche (7) und mit einer Spreizfläche (13) an der Keilfläche (9) anliegt, wobei sich das vordere Ende des Klemmkeils (2) nicht bis zum vorderen Ende (10) des Schaftes (3) erstreckt und das hintere Ende des Klemmkeils (2) über den Flansch (5) hinausragt und wobei der Klemmkeil (2) zwischen dem Flansch (5) und der Spreizfläche (13) mit einer Sollbruchzone (15) versehen ist,
**dadurch gekennzeichnet,**
**daß** die Sollbruchzone (15) einen flachen Keil-Abschnitt (24) aufweist, der zwei in Richtung der Mittel-Längs-Achse (6) im Abstand voneinander angeordnete Sollbruchstellen (25, 26) aufweist, die quer zur Mittel-Längs-Achse (6) und im wesentlichen parallel zur Fläche (7) verlaufen.

2. Befestigungselement nach Anspruch 1, **dadurch gekennzeichnet, daß** der Abstand 1 der Sollbruchstellen (25, 26) deutlich größer als die Dicke e des Keil-Abschnitts (24) ist.

3. Befestigungselement nach Anspruch 2, **dadurch gekennzeichnet, daß** für das Verhältnis des Abstandes 1 der Sollbruchstellen (25, 26) zur Dicke e des Keil-Abschnitts (24) gilt: 5 ≤ l/e ≤ 10.

4. Befestigungselement nach einem der Ansprüche 1 bis 3, **dadurch gekennzeichnet,**
**daß** der Keil-Abschnitt (24) etwa gleichbleibende Dicke e aufweist.

5. Befestigungselement nach einen der Ansprüche 1 bis 4, **dadurch gekennzeichnet,**
**daß** der Keil-Abschnitt (24) zwischen den Sollbruchstellen (25, 26) quer zur Mittel-Längs-Achse (6) ausgebaucht ist.

6. Befestigungselement nach einem der Ansprüche 1 bis 5, **dadurch gekennzeichnet,**
**daß** von mindestens einer Sollbruchstelle (25, 26) eine vom Keil-Abschnitt (24) weg geneigte Schrägfläche (27, 28) in die Außenfläche (17) übergeht.

7. Befestigungselement nach einem der Ansprüche 1 bis 6, **dadurch gekennzeichnet,**
**daß** an mindestens einer Sollbruchstelle (25, 26) eine quer zur Mittel-Längs-Achse (6) und parallel zur Anlagefläche (12) verlaufende Kerbe (29, 30) vorgesehen ist.

8. Befestigungselement nach einem der Ansprüche 1 bis 7, **dadurch gekennzeichnet,**
**daß** der Ankerbolzen (1) und der Klemmkeil (2) aus hochlegiertem Chrom-Nickel-Stahl bestehen.

9. Befestigungselement nach einem der Ansprüche 1 bis 8, **dadurch gekennzeichnet,**
**daß** der Klemmkeil (2) aus hartgezogenem rostfreiem Stahl besteht.

10. Befestigungselement nach einem der Ansprüche 1 bis 7 **dadurch gekennzeichnet,**
**daß** es aus Baustahl besteht.

11. Befestigungselement nach einem der Ansprüche 1 bis 10, **dadurch gekennzeichnet,**
**daß** der Klemmkeil (2) etwa eineinhalb mal bis doppelt so hart ist wie der Ankerbolzen (1).

12. Befestigungselement nach einem der Ansprüche 1 bis 11, **dadurch gekennzeichnet,**
**daß** der Klemmkeil (2) im Bereich des Flansches (5) einen den Flansch (5) durchsetzenden, vom Schaft (3) weg abgekröpften Abschnitt (14) aufweist.

## Claims

1. Fastening element consisting of a tie bolt (1) with a shank (3) and a clamping wedge (2), wherein a flange (5) with a recess (11) for the clamping wedge (2) is provided in the rear end (4) of the tie bolt (1), wherein the shank (3) is provided in its frontal area with a wedge face (9) which is inclined from the front end (10) in the direction to the rear end (4) of the shank (3) towards the central longitudinal axis (6) of the tie bolt (1), wherein this wedge face (9) is adjoined by a face (7) which is substantially parallel to the central longitudinal axis (6) and extends as far as to the rear end, and wherein the clamping wedge (2), in its non-extended state, bears by a contact face (12) against the axially parallel face (7) and by an expansion face (13) against the wedge face (9), wherein the front end of the clamping wedge (2) does not extend as far as to the front end (10) of the shank (3) and the rear end of the clamping wedge (2) extends beyond the flange (5), and wherein the clamping wedge (2) is provided with a rated break zone (15) between the flange (5) and the expansion face (13),
**characterized in**
**that** the rated break zone (15) has a flat wedge section (24) which has two predetermined breaking points (25, 26), which are arranged at a distance from one another in the direction of the central longitudinal axis (6), and which extend transversally to the central longitudinal axis (6) and substantially parallel to the face (7).

2. Fastening element according to claim 1, **characterized in**
**that** the distance 1 of the predetermined breaking points (25, 26) is distinctly greater than the thickness e of the wedge section (24).

3. Fastening element according to claim 2, **characterized in**
**that** 5 ≤ 1/e 1/e ≤ 10 applies to the ratio of the distance 1 of the predetermined breaking points (25, 26) to the wedge section (24).

4. Fastening element according to one of claims 1 to 3, **characterized in**
**that** the wedge section (24) has an approximately constant thickness e.

5. Fastening element according to one of claims 1 to 4, **characterized in**
**that** the wedge section (24) is bulged between the predetermined breaking points (25, 26) transversally to the central longitudinal axis (6).

6. Fastening element according to one of claims 1 to 5, **characterized in**
**that** a slant (27, 28), which inclines from at least one rated break point (25, 26) away from the wedge section (24), passes into the outer surface (17).

7. Fastening element according to one of claims 1 to 6, **characterized in**
**that** at at least one rated break point (25, 26), a notch (29, 30) is provided which extends transversally to the central longitudinal axis (6) and parallel to the contact face (12).

8. Fastening element according to one of claims 1 to 7, **characterized in**
**that** the tie bolt (1) and the clamping wedge (2) consist of high-alloy chromium-nickel steel.

9. Fastening element according to one of claims 1 to 8, **characterized in**
**that** the clamping wedge (2) consists of hard drawn stainless steel.

10. Fastening element according to one of claims 1 to 7, **characterized in**
**that** it consists of structural steel.

11. Fastening element according to one of claims 1 to 10, **characterized in**
**that** the clamping wedge (2) is approximately one and a half to two times as hard as the tie bolt (1).

12. Fastening element according to one of claims 1 to 11, **characterized in**
**that** the clamping wedge (2), in the area of the flange (5), has a section (14) which passes through the flange (5) and is crimped away from the shank (3).

## Revendications

1. Élément de fixation composé d'un boulon d'ancrage (1) avec une tige (3) et un coin de serrage (2), un collet (5) avec un évidement (11) pour le coin de serrage (2) étant prévu à l'extrémité arrière (4) du boulon d'ancrage (1), la tige (3) étant munie dans sa zone avant d'une surface en coin (9) qui est inclinée depuis son extrémité avant (10) en direction de l'extrémité arrière (4) vers l'axe longitudinal médian (6) du boulon d'ancrage (1), une surface (7) qui s'étend pour l'essentiel parallèlement à l'axe longitudinal médian (6) et qui va jusqu'à l'extrémité arrière (4) se raccordant à cette surface en coin (9) et le coin de serrage (2) dans l'état non écarté s'appuyant avec une surface d'appui (12) sur la surface (7) parallèle à l'axe et avec une surface d'écartement (13) sur la surface en coin (9), l'extrémité avant du coin de serrage (2) ne s'étendant pas jusqu'à l'extrémité avant (10) de la tige (3) et l'extrémité arrière du coin de serrage (2) faisant saillie sur le collet (5) et le coin de serrage (2) étant muni d'une zone destinée à la rupture (15) entre le collet (5) et la surface d'écartement (13),
**caractérisé en ce que** la zone destinée à la rupture (15) présente un segment de coin (24) plat qui présente deux zones destinées à la rupture (25, 26), placées à distance l'une de l'autre en direction de l'axe longitudinal médian (6), qui s'étendent obliquement par rapport à l'axe longitudinal médian (6) et pratiquement parallèlement à la surface (7).

2. Élément de fixation selon la revendication 1 **caractérisé en ce que** la distance 1 des zones destinées à la rupture (25, 26) est significativement plus grande que l'épaisseur e du segment de coin (24).

3. Élément de fixation selon la revendication 2 **caractérisé en ce que** le rapport de distance 1 des zones destinées à la rupture (25, 26) sur l'épaisseur e du segment de coin (24) vérifie : 5 ≤ 1/e ≤ 10.

4. Élément de fixation selon l'une des revendications 1 à 3 **caractérisé en ce que** le segment de coin (24) présente une épaisseur e à peu près constante.

5. Élément de fixation selon l'une des revendications 1 à 4 **caractérisé en ce que** le segment de coin (24) est renflé obliquement par rapport à l'axe longitudinal médian (6) entre les zones destinées à la rupture (25, 26).

6. Élément de fixation selon l'une des revendications 1 à 5 **caractérisé en ce qu'**à partir d'au moins une zone destinée à 'la rupture (25, 26) une surface oblique (27, 28) inclinée à partir du segment de coin (24) se transforme en la surface extérieure (17).

7. Élément de fixation selon l'une des revendications 1 à 6 **caractérisé en ce qu'**une encoche (29, 30) qui s'étend obliquement par rapport à l'axe longitudinal médian (6) et parallèlement à la surface d'appui (12) est prévue sur au moins une zone destinée à la rupture (25, 26).

8. Élément de fixation selon l'une des revendications 1 à 7 **caractérisé en ce que** le boulon d'ancrage (1) et le coin de serrage (2) sont en un acier au nickel-chrome fortement allié.

9. Élément de fixation selon l'une des revendications 1 à 8 **caractérisé en ce que** le coin de serrage (2) est en acier inoxydable étiré à froid.

10. Élément de fixation selon l'une des revendications 1 à 7 **caractérisé en ce qu'**il est en acier de construction.

11. Élément de fixation selon l'une des revendications 1 à 10 **caractérisé en ce que** le coin de serrage (2) est environ une fois et demie à deux fois plus dur que le boulon d'ancrage (1).

12. Élément de fixation selon l'une des revendications 1 à 11 **caractérisé en ce que** le coin de serrage (2) présente dans la zone du collet (5) un segment (14) coudé à partir de la tige (3) et traversant le collet (5).
